# FASCICULE DE BREVET EUROPEEN

(11) **EP 4 638 223 B1**
(45) Date de publication et mention de la délivrance du brevet: **04.11.2026**
(21) Numéro de dépôt: 23818050.9
(22) Date de dépôt: 05.12.2023
(51) Int. Cl.: B60W 30/182, B60W 40/09

(54) **ADAPTATION D'UNE FONCTIONNALITÉ DE GESTION AUTOMATISÉE D'UN MODE FONCTIONNEMENT D'UN VÉHICULE AUTOMOBILE SELON LE COMPORTEMENT DU CONDUCTEUR**
ANPASSUNG EINER FUNKTION ZUR AUTOMATISIERTEN VERWALTUNG EINER BETRIEBSART EINES KRAFTFAHRZEUGS IN ABHÄNGIGKEIT VOM VERHALTEN DES FAHRERS
ADAPTATION OF A FUNCTION FOR AUTOMATED MANAGEMENT OF AN OPERATING MODE OF A MOTOR VEHICLE ACCORDING TO THE BEHAVIOUR OF THE DRIVER

(30) Priorité: 21.12.2022 FR 2214179
(43) Date de publication de la demande: 29.10.2025
(73) Titulaire: Ampere SAS, 92100 Boulogne-Billancourt (FR)
(72) Inventeur: BYAH, Mohcine, 78084 Guyancourt cedex (FR)
(74) Mandataire: Renault Group
(86) Numéro de dépôt international: PCT/EP2023/084387
(87) Numéro de publication internationale: WO 2024/132516

(56) Documents cités:
- EP-A1- 3 002 172
- WO-A1-2013/004764
- WO-A1-2021/204697
- CN-A- 113 619 558
- KR-A- 20200 061 705

## Description

### Domaine technique de l'invention

La présente invention concerne le domaine des systèmes d'aide à la conduite des véhicules automobiles. L'invention porte en particulier sur un procédé de gestion, par un dispositif informatique embarqué à bord d'un véhicule automobile, de la fourniture par un système d'aide à la conduite du véhicule d'une fonctionnalité de gestion automatisée du mode de fonctionnement du véhicule. L'invention concerne également un dispositif mettant en œuvre un tel procédé. L'invention s'applique aux véhicules automobiles tels que les véhicules terrestres à moteur, notamment les voitures.

### État de la technique antérieure

EP 3 002 172 A1 divulgue un appareil pour commander un mode de conduite d'un véhicule, comprenant un détecteur d'informations de conduite configuré pour détecter des informations de conduite pour déterminer une tendance de conduite. On sait que la plupart des véhicules actuels peuvent fonctionner selon plusieurs modes de fonctionnement et qu'ils sont classiquement équipés de systèmes d'aide à la conduite qui, généralement, permettent aux conducteurs de choisir entre un mode de fonctionnement économique, un mode de fonctionnement normal ou un mode de fonctionnement sportif. Suivant le mode de fonctionnement sélectionné, le système d'aide à la conduite modifie les paramètres de fonctionnement du véhicule, en particulier ceux qui contrôlent certains équipements primaires du véhicule, notamment le groupe motopropulseur, les suspensions, la boite de vitesse ou l'échappement, pour ainsi faciliter la mise en œuvre de différents styles de conduite. On sait aussi que la plupart des systèmes d'aide à la conduite actuels fournissent une fonctionnalité de gestion automatisée du mode de fonctionnement du véhicule pour affranchir le conducteur du besoin de sélectionner manuellement un mode de fonctionnement. Pour fournir une telle fonctionnalité, les systèmes d'aide à la conduite connus sélectionnent généralement un mode de fonctionnement à un instant courant parmi des modes de fonctionnement préétablis en déterminant une valeur de la moyenne glissante d'un indice de style de conduite qui est fonction de paramètres de conduite relatifs aux accélérations réalisées, aux changements de rapport de boite de vitesse effectués ou à la manière de réaliser des freinages, notamment de les anticiper. Et c'est en fonction de cette valeur calculée en continu et exploitée vis-à-vis de valeurs de seuils de basculement préétablis entre des modes de fonctionnement disponibles que certains systèmes d'aide à la conduite connus opèrent des basculements d'un mode de fonctionnement à l'autre lorsqu'une fonctionnalité de gestion automatisée du mode de fonctionnement du véhicule est activée. Pour ces systèmes, ce sont donc les valeurs de ces seuils de basculement qui déterminent la sélection automatisée des modes de fonctionnement. Or, ces valeurs sont fixées au moment de la conception des véhicules sans qu'il ne soit plus possible ensuite de les modifier. Ainsi, un conducteur qui n'est pas satisfait de la manière avec laquelle une fonctionnalité de gestion automatisée du mode de fonctionnement du véhicule opère les basculements entre différents modes de fonctionnement préétablis - un conducteur peut en effet considérer que les basculements réalisés induisent une conduite trop douce ou, au contraire, trop agressive - n'a aucun moyen d'intervenir pour changer cela, car cela implique justement la nécessité de pouvoir changer les valeurs des seuils de basculement. En ce sens, on peut considérer que les systèmes d'aide à la conduite connus qui fournissent une fonctionnalité de gestion automatisée du mode de fonctionnement du véhicule en procédant de la manière évoquée ci-dessus manquent d'ergonomie.

### Résumé de l'invention

L'invention vise à remédier à cela. L'invention a en effet pour but de fournir une solution pour lier une fonctionnalité de gestion automatisée d'un mode de fonctionnement d'un véhicule automobile fournie par un système d'aide à la conduite du véhicule au comportement du conducteur du véhicule. L'invention souhaite en particulier permettre l'adaptabilité continuelle d'une fonctionnalité de gestion automatisée du mode de fonctionnement du véhicule d'un système d'aide à la conduite en fonction du comportement du conducteur du véhicule. Par ce biais, l'invention a pour objectif de pouvoir satisfaire au mieux un conducteur d'un véhicule automobile sur le plan de la gestion automatisée du mode de fonctionnement du véhicule, et ainsi contribuer à une amélioration de l'ergonomie des systèmes d'aide à la conduite qui fournissent une telle fonctionnalité.

Afin d'atteindre ces buts, l'invention concerne, selon un premier aspect, un procédé de gestion, par un dispositif informatique embarqué à bord d'un véhicule automobile, de la fourniture par un système d'aide à la conduite du véhicule d'une fonctionnalité de gestion automatisée du mode de fonctionnement du véhicule, ladite fonctionnalité opérant la sélection d'un mode de fonctionnement courant en fonction de données caractérisant au moins une valeur d'au moins un seuil de basculement entre deux modes de fonctionnement préétablis, le procédé comprenant les étapes de :
i. déterminer des données caractérisant un comportement d'un conducteur du véhicule en interagissant avec le système d'aide à la conduite ; et
ii. déterminer les données caractérisant au moins une valeur d'au moins un seuil de basculement entre deux modes de fonctionnement préétablis en fonction des données caractérisant un comportement d'un conducteur du véhicule.

Selon une variante, au cours de l'étape i), peuvent être déterminées des données caractérisant au moins un changement de mode de fonctionnement initié par un conducteur du véhicule tandis que la fonctionnalité de gestion automatisée du mode de fonctionnement du véhicule est inactive et/ou des données caractérisant au moins un refus stipulé en réponse à la diffusion d'une proposition de changement de mode de fonctionnement provoquée par un assistant personnel virtuel du véhicule tandis que la fonctionnalité de gestion automatisée du mode de fonctionnement du véhicule est inactive, sur la base desquelles peuvent être déterminées les données caractérisant un comportement d'un conducteur du véhicule.

Selon une autre variante, au cours de l'étape ii), peuvent être déterminées des données caractérisant au moins un instant auquel ledit changement de mode fonctionnement est intervenu et/ou ledit refus a été stipulé.

Selon encore une autre variante, au cours de l'étape ii), peuvent être déterminées des données caractérisant au moins une valeur de la moyenne glissante d'un indice de style de conduite en lien avec ledit instant.

Selon encore une autre variante, au cours de l'étape ii), peuvent être déterminées des données caractérisant au moins une résultante d'une comparaison entre la valeur de la moyenne glissante d'un indice de style de conduite en lien avec ledit instant et une valeur courante d'un seuil de basculement entre deux modes de fonctionnement.

Selon encore une autre variante, au cours de l'étape ii), peuvent être déterminées des données caractérisant l'application d'un facteur de pondération à la valeur courante d'un seuil de basculement entre deux modes de fonctionnement.

Selon encore une autre variante, au cours de l'étape i), peuvent être déterminées des données caractérisant un historique de valeurs de la moyenne glissante d'un indice de style de conduite, sur la base desquelles peuvent être déterminées les données caractérisant un comportement d'un conducteur du véhicule.

Selon encore une autre variante, les données caractérisant un historique de valeurs de la moyenne glissante d'un indice de style de conduite peuvent être déterminées seulement s'il est établi que le véhicule se trouve dans une situation de conduite stable.

Selon encore une autre variante, au cours de l'étape ii), peuvent être déterminées des données caractérisant au moins une valeur de la proportion des valeurs dudit historique qui divergent d'une valeur courante d'un seuil de basculement entre un mode de fonctionnement sélectionné et un autre mode de fonctionnement.

Selon encore une autre variante, au cours de l'étape ii), peuvent être déterminées des données caractérisant au moins une valeur résultante d'une soustraction ou d'un ajout d'une valeur d'un paramètre de dispersion à ladite valeur courante d'un seuil de basculement entre un mode de fonctionnement sélectionné et un autre mode de fonctionnement.

Selon encore une autre variante, des données caractérisant au moins une valeur d'accélération, au moins un valeur relative à un changement de rapport de boite de vitesse et au moins une valeur relative à l'anticipation de freinages peuvent être déterminées, sur la base desquelles peuvent être déterminées les données caractérisant au moins une valeur de la moyenne glissante d'un indice de style de conduite en lien avec ledit instant et les données caractérisant un historique des valeurs de la moyenne glissante d'un indice de style de conduite.

Selon un deuxième aspect, l'invention concerne un dispositif de gestion de la fourniture par un système d'aide à la conduite d'un véhicule automobile d'une fonctionnalité de gestion automatisée du mode de fonctionnement du véhicule, ladite fonctionnalité opérant la sélection d'un mode de fonctionnement courant en fonction de données caractérisant au moins une valeur d'au moins un seuil de basculement entre deux modes de fonctionnement préétablis, le dispositif comprenant au moins une unité de traitement d'informations, comprenant au moins un processeur, et un support de stockage de données configurés pour mettre en œuvre un procédé tel que décrit ci-dessus.

Selon un troisième aspect, l'invention concerne un programme d'ordinateur comprenant des instructions de code de programme pour l'exécution des étapes d'un procédé tel que décrit ci-dessus lorsque ledit programme est exécuté par au moins un processeur.

Selon un quatrième aspect, l'invention concerne un support utilisable dans un ordinateur sur lequel un programme tel que décrit ci-dessus est enregistré.

Selon un cinquième aspect, l'invention concerne un véhicule automobile comprenant un dispositif tel que décrit ci-dessus.

### Brève description des figures

D'autres caractéristiques et avantages de l'invention apparaîtront à l'examen de la description détaillée ci-après, et des dessins annexés, sur lesquels :
[Fig.1] est un graphique illustrant le contexte selon l'invention ;
[Fig.2] est un diagramme fonctionnel d'un dispositif selon l'invention ;
[Fig.3] est un organigramme des étapes d'un procédé selon l'invention ;
[Fig.4] illustre graphiquement la mise en œuvre d'au moins une étape du procédé selon l'invention ;
[Fig.5] illustre graphiquement la mise en œuvre d'au moins une étape du procédé selon l'invention ;
[Fig.6] illustre graphiquement la mise en œuvre d'au moins une étape du procédé selon l'invention ; et
[Fig.7] illustre graphiquement un exemple de la répartition d'un historique de valeurs de la moyenne glissante d'un indice de style de conduite.

### Description détaillée de l'invention

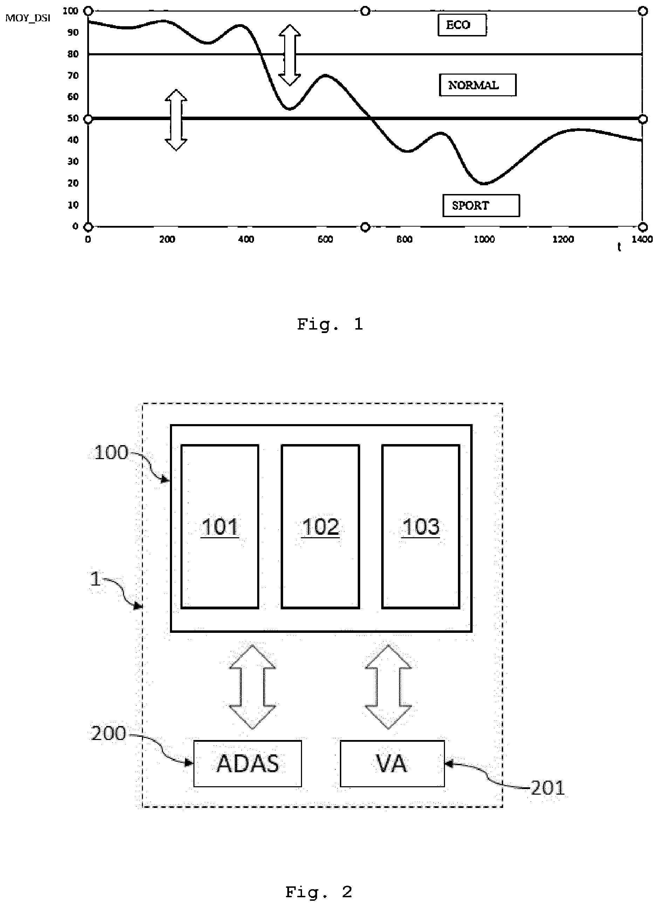

La [Fig.1] illustre le contexte de l'invention au moyen d'un graphique montrant l'évolution dans le temps de la valeur de la moyenne glissante d'un indice de style de conduite (ou DSI, de l'anglais Driving Style Index) au cours d'un roulage, valeur qui, selon l'invention, est déterminé en fonction de paramètres relatifs à des accélérations réalisées, des changements de rapport de boite de vitesse effectués et l'anticipation de freinages. Un véhicule automobile selon l'invention embarque classiquement un système d'aide à la conduite qui comporte des moyens pour sélectionner manuellement un mode de fonctionnement du véhicule et qui fournit une fonctionnalité de gestion automatisée du mode de fonctionnement du véhicule. Lorsque cette fonctionnalité est activée, le système d'aide à la conduite sélectionne à un instant courant l'un des modes de fonctionnement disponibles (ECO, NORMAL, SPORT) en fonction de la valeur de la moyenne glissante de l'indice de style de conduite à cet instant et des valeurs de seuils de basculements entre les différents modes de fonctionnement préétablis. Selon l'exemple illustré sur la figure, le système d'aide à la conduite sélectionne un mode de fonctionnement économique (ECO) lorsque la valeur de la moyenne glissante de l'indice de style de conduite est supérieure ou égale à 80, il sélectionne un mode de fonctionnement normal (NORMAL) lorsque la valeur de la moyenne glissante d'un indice de style de conduite est comprise entre 50 et 80 et il sélectionne un mode de fonctionnement sportif (SPORT) lorsque la valeur de la moyenne glissante d'un indice de style de conduite est inférieure à 50. En d'autres termes, la fonctionnalité de gestion automatisée d'un mode de fonctionnement du véhicule fournie par le système d'aide à la conduite d'un véhicule automobile selon l'invention opère classiquement la sélection d'un mode de fonctionnement courant en fonction des valeurs de seuils de basculement. Cependant, grâce au dispositif de gestion de la fourniture par un système d'aide à la conduite d'un véhicule automobile d'une fonctionnalité de gestion automatisée du mode de fonctionnement du véhicule selon l'invention décrit ci-après, qui met en œuvre un procédé de gestion de la fourniture par un système d'aide à la conduite d'un véhicule automobile d'une fonctionnalité de gestion automatisée du mode de fonctionnement du véhicule selon l'invention décrit ci-dessous, ces valeurs des seuils de basculement ne sont plus fixes comme c'est le cas pour les systèmes d'aide à la conduite connus. Au contraire, elles sont continuellement adaptées en fonction du comportement du conducteur, comme illustré au moyen des flèches. Comme on le verra, c'est en procédant de la sorte que l'on peut permettre la sélection des modes de fonctionnement d'un véhicule d'une manière susceptible de mieux satisfaire les préférences d'un conducteur et, par ce biais, que l'on peut contribuer à la fourniture d'une fonctionnalité de gestion automatisée d'un mode de fonctionnement d'un véhicule automobile plus ergonomique.

Un dispositif 100 de gestion de la fourniture par un système d'aide à la conduite d'un véhicule automobile d'une fonctionnalité de gestion automatisée du mode de fonctionnement du véhicule selon l'invention, qui est embarqué à bord d'un véhicule automobile 1 selon l'invention, est illustré sur la [Fig.2]. Il s'agit d'un appareil informatique qui comprend au moins une unité de traitement d'informations 101, comportant un ou plusieurs processeurs, un support de stockage de données 102, sur lequel est notamment enregistré un programme qui comprend des instructions de code de programme pour l'exécution des étapes du procédé selon l'invention décrit plus loin, et une interface d'entrée et sortie 103 permettant la réception et l'émission de données.

De manière préférentielle, le dispositif 100 selon l'invention est hébergé sur un ou plusieurs calculateurs ou autres unités de commande électroniques du véhicule. Alternativement, comme illustré sur la [Fig.2], le dispositif 100 selon l'invention est hébergé sur un calculateur indépendant et il interagit par le biais de son interface d'entrée et sortie 103 et au moyen d'un réseau de communication filaire du véhicule (e.g. CAN, Ethernet) - matérialisé par les flèches à double sens - avec un calculateur du système d'aide à la conduite 200 du véhicule. Selon un autre mode de réalisation, le dispositif 100 selon l'invention fait partie intégrante d'un calculateur du système d'aide à la conduite 200 du véhicule 1. Ainsi, en interagissant ou en faisant partie intégrante du système d'aide à la conduite 200, le dispositif 100 selon l'invention est en mesure, notamment, de détecter un changement de mode de fonctionnement initié par un conducteur du véhicule tandis que la fonctionnalité de gestion automatisée du mode de fonctionnement du véhicule fournie par le système d'aide à la conduite 200 est inactive.

De plus, pour mettre en œuvre au moins l'une des étapes du procédé selon l'invention décrit ci-dessous, le dispositif 100 selon l'invention comprend des moyens matériels et logiciels pour interagir avec un assistant personnel virtuel 201 du véhicule, qui utilise conventionnellement des équipements de restitution de contenus sonores et/ ou visuels (e.g. écrans, haut-parleurs) et des interfaces de saisies (e.g. commande vocale, écran tactile) pour interagir avec un conducteur du véhicule. Grâce à ces moyens, le dispositif 100 selon l'invention peut, notamment, déterminer une saisie stipulée en réponse à la diffusion d'une proposition de changement de mode de fonctionnement provoquée par l'assistant personnel virtuel 201 du véhicule.

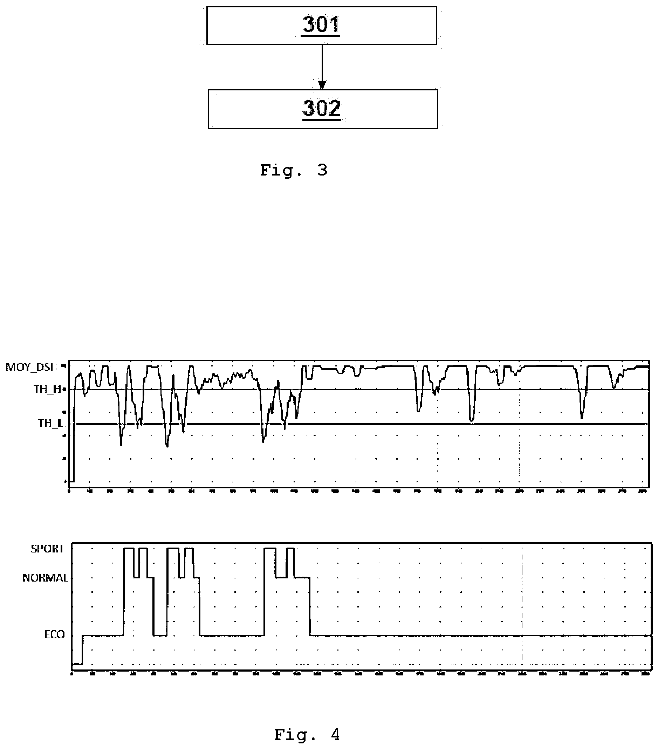

Selon l'invention, tous les éléments décrits ci-dessus contribuent pour permettre la mise en œuvre d'un procédé de gestion de la fourniture par un système d'aide à la conduite d'un véhicule automobile d'une fonctionnalité de gestion automatisée du mode de fonctionnement du véhicule, ladite fonctionnalité opérant la sélection d'un mode de fonctionnement courant en fonction de données caractérisant au moins une valeur d'au moins un seuil de basculement entre deux modes de fonctionnement préétablis, tel que décrit ci-dessous en lien avec les figures 3-7.

Selon une première étape 301 du procédé selon l'invention, le dispositif 100 selon l'invention détermine des données caractérisant un comportement d'un conducteur du véhicule en interagissant avec le système d'aide à la conduite 200.

Pour ce faire, selon un premier mode de réalisation, le dispositif 100 selon l'invention détermine des données caractérisant au moins un changement de mode de fonctionnement initié par un conducteur du véhicule tandis que la fonctionnalité de gestion automatisée du mode de fonctionnement du véhicule est inactive et/ou des données caractérisant au moins un refus stipulé en réponse à la diffusion d'une proposition de changement de mode de fonctionnement provoquée par l'assistant personnel virtuel 201 tandis que la fonctionnalité de gestion automatisée du mode de fonctionnement du véhicule est inactive. En d'autres termes, le dispositif 100 selon l'invention détermine dans ce cas un comportement du conducteur qui est basé sur des choix du mode de fonctionnement du véhicule que le conducteur réalise soit en opérant manuellement des changements de mode de fonctionnement tandis que la fonctionnalité de gestion automatisée d'un mode de fonctionnement du véhicule est inactive soit en effectuant une saisie d'un refus d'un changement de mode fonctionnement en réponse à la diffusion d'une telle proposition par l'assistant personnel virtuel 201 tandis que la fonctionnalité de gestion automatisée d'un mode de fonctionnement est inactive. En effet, dans le premier cas, le conducteur peut choisir manuellement de changer de mode de fonctionnement (par exemple pour obtenir plus de puissance en passant à un mode de fonctionnement SPORT, ou pour consommer moins en basculant sur un mode de fonctionnement ECO). Dans le deuxième cas, lorsque la fonctionnalité de gestion automatisée du mode de fonctionnement du véhicule est inactive, l'assistant personnel virtuel 201 suggère un changement de mode de fonctionnement, notamment l'activation de la fonctionnalité de gestion automatisée du mode de fonctionnement du véhicule, s'il établit que l'écart entre un mode de fonctionnement sélectionné manuellement et le style de conduite, déterminé à partir de la moyenne glissante de l'indice de style de conduite est important (i.e. au-delà d'une certaine valeur préétablie). Ainsi, selon le premier mode de réalisation, les données caractérisant un comportement du conducteur sont déterminées en fonction des changements manuels de mode de fonctionnement que celui-ci opère et en fonction de choix qu'il exprime en réponse à des propositions concernant des changements de mode de fonctionnement diffusées par l'assistant personnel virtuel 201. Et, comme on le verra plus bas, c'est en fonction de telles données que le dispositif 100 selon l'invention permet une plus grande satisfaction du conducteur lors de la fourniture de la fonctionnalité de gestion automatisée du mode de fonctionnement du véhicule.

Selon un deuxième mode de réalisation, le dispositif 100 selon l'invention détermine les données caractérisant un comportement d'un conducteur du véhicule en déterminant préalablement des données caractérisant un historique de valeurs de la moyenne glissante d'un indice de style de conduite. Préférentiellement, ces données sont déterminées seulement s'il est établi que le véhicule se trouve dans une situation de conduite stable, c'est-à-dire s'il ne circule pas dans un embouteillage ou qu'une fonctionnalité de gestion de freinages d'urgence fournie par le système d'aide à la conduite 200 est inactive. Si tel est le cas, le dispositif 100 selon l'invention mémorise continuellement, par exemple sur son support de stockage de données 102, la valeur de la moyenne glissante de l'indice de conduite à chaque instant, et ce sont en fonction de ces données que sont déterminées un comportement d'un conducteur du véhicule. Comme on le verra ci-dessous, c'est aussi en exploitant de telles données que le dispositif 100 selon l'invention peut permettre la fourniture d'une fonctionnalité de gestion automatisée du mode de fonctionnement d'un véhicule automobile plus ergonomique.

Ensuite, selon une deuxième étape 302 du procédé selon l'invention, le dispositif 100 selon l'invention détermine les données caractérisant au moins une valeur d'au moins un seuil de basculement entre deux modes de fonctionnement préétablis en fonction des données caractérisant un comportement d'un conducteur du véhicule. Ainsi, c'est lors de la mise en œuvre de cette deuxième étape 302 du procédé que le dispositif 100 selon l'invention permet avantageusement la modulation des valeurs des seuils de basculement en fonction du comportement d'un conducteur du véhicule.

Selon le premier mode de réalisation, c'est-à-dire lorsque le comportement d'un conducteur du véhicule est déterminé en fonction de changements de mode fonctionnement opérés manuellement ou de stipulations (i.e. saisies) en réponse à des propositions diffusées par l'assistant personnel virtuel 201, le dispositif 100 selon l'invention procède, premièrement, en déterminant des données caractérisant au moins un instant auquel ledit changement de mode fonctionnement est intervenu et/ou ledit refus a été stipulé, il détermine ensuite des données caractérisant au moins une valeur de la moyenne glissante d'un indice de style de conduite en lien avec cet instant, puis il détermine des données caractérisant au moins une valeur résultante d'une comparaison entre la valeur de la moyenne glissante d'un indice de style de conduite en lien avec cet instant et une valeur courante d'un seuil de basculement entre deux modes de fonctionnement et, enfin, il détermine éventuellement des données caractérisant l'application d'un facteur de pondération à la valeur courante d'un seuil de basculement entre deux modes de fonctionnement. C'est de cette manière expliquée plus en détail ci-dessous en lien avec les figures 4-6 que le dispositif 100 selon l'invention détermine les données caractérisant au moins une valeur d'au moins un seuil de basculement entre deux modes de fonctionnement préétablis, valeurs qui sont utilisées par la fonctionnalité de gestion automatisée du mode de fonctionnement du véhicule. C'est donc ainsi qu'il contribue à permettre l'adaptabilité des valeurs des seuils de basculement selon le comportement d'un conducteur, lui-même avantageusement déterminé en fonction de données spécifiques tel qu'expliqué plus haut.

On a représenté sur la [Fig.4], sur un premier graphique, l'évolution temporelle de la moyenne glissante de l'indice de style de conduite au cours d'un roulage (MOY_DSI) et, en dessous, un deuxième graphique montrant les modes de fonctionnement du véhicule correspondants dans le cas où une fonctionnalité de gestion automatisée du mode de fonctionnement active utilise des valeurs de seuils de basculements entre les modes de fonctionnement préétablis qui sont fixes. En d'autres termes, sur la [Fig.4] est illustré graphiquement le fonctionnement de la fonctionnalité de gestion automatisée du mode de fonctionnement du véhicule au début de la mise en œuvre du procédé selon l'invention. Selon l'exemple, une valeur d'un premier seuil de basculement haut (TH_H) est fixée à une valeur de la moyenne glissante de l'indice de style de conduite égale à 80, tandis qu'une valeur d'un deuxième seuil de basculement bas (TH_L) est fixée à une valeur de la moyenne glissante de l'indice de style de conduite égale à 50. Le mode de fonctionnement ECO correspond aux valeurs de la moyenne glissante de l'indice de style de conduite supérieures à 80, le mode de fonctionnement NORMAL correspond aux valeurs comprises entre 50 et 80 et le mode de fonctionnement SPORT correspond aux valeurs inférieures à 50. Lors de ce roulage, la fonctionnalité de gestion automatisée d'un mode de fonctionnement du véhicule bascule donc dans un premier temps d'un mode de fonctionnement préétabli à l'autre classiquement en fonction de la valeur de la moyenne glissante de l'indice de style de conduite, par exemple dès lors que celle-ci reste suffisamment longtemps (30s) au-dessus, en dessous ou entre les seuils haut et bas prédéfinis. Un mode de fonctionnement est maintenu au minimum pendant 15s pour éviter des changements trop fréquents. Comme on le voit sur le graphique du bas, le mode de fonctionnement ECO est majoritairement sélectionné, parfois le mode de fonctionnement NORMAL et, à 6 reprises, le mode de fonctionnement SPORT.

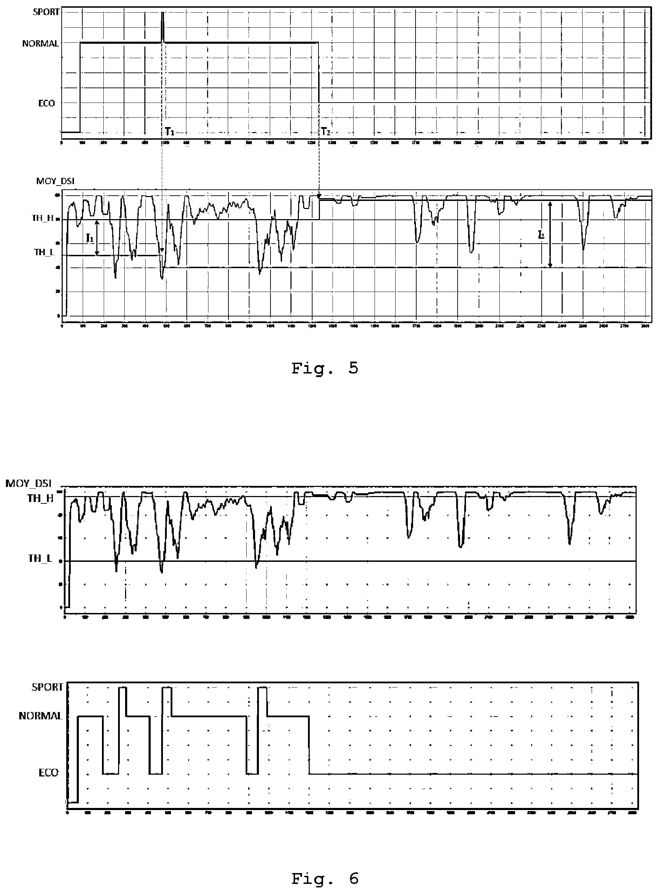

On a représenté sur la [Fig.5] un premier graphique des modes de fonctionnement sélectionnés manuellement par un conducteur au cours du même roulage, de fait cette fois-ci lorsque la fonctionnalité de gestion automatisée d'un mode de fonctionnement du véhicule est inactive et, en dessous, un deuxième graphique illustrant l'évolution de la moyenne glissante de l'indice de style de conduite et les adaptations des valeurs de seuils de basculement induites par les changements de mode de fonctionnement opérés manuellement par le conducteur. Selon cet exemple, le dispositif 100 selon l'invention détermine des données caractérisant au moins un instant auquel ledit changement de mode de fonctionnement est intervenu et/ou ledit refus a été stipulé, les instants marqués T₁ et T₂ sur la figure. En effet, comme on le voit sur le graphique du haut, le conducteur a été plus souvent favorable à la sélection du mode de fonctionnement NORMAL, qu'il a imposé dans un premier temps, puis il a sélectionné le mode de fonctionnement SPORT à l'instant T₁ et il a enfin sélectionné le mode de fonctionnement ECO à l'instant T₂, instant auquel la moyenne glissante de l'indice de style de conduite avait une valeur de 96. En conséquence, le dispositif 100 selon l'invention détermine une valeur adaptée du premier seuil de basculement haut (TH_H) correspondant précisément à cette valeur de la moyenne glissante de l'indice de style de conduite à l'instant T₂. De manière similaire, il détermine une valeur adaptée du deuxième seuil de basculement bas (TH_L) en considérant la valeur de la moyenne glissante de l'indice de style de conduite à l'instant T₁. L'intervalle des valeurs de la moyenne glissante de l'indice de style de conduite correspondant au mode de fonctionnement NORMAL s'en trouve ainsi élargi, passant de I₁ à I₂.

Pour déterminer ces valeurs adaptées des seuils de basculement, le dispositif 100 selon l'invention procède de la manière suivante. Tout d'abord il détermine la valeur de la moyenne glissante de l'indice de style de conduite à l'instant auquel le changement est intervenu, MOY_DSI(Ti), puis il compare la valeur de la moyenne glissante d'un indice de style de conduite obtenue et la valeur courante d'un seuil de basculement entre deux modes de fonctionnement. Par exemple, en T₁, le dispositif 100 selon l'invention compare la valeur de la moyenne glissante de l'indice de style de conduite en T₁, inférieure à 40, et la valeur du seuil de basculement bas (TH_L), soit 50. Dans ce cas, lorsque la valeur courante de la moyenne glissante de l'indice de style de conduite est inférieure à la valeur du seuil de basculement, le dispositif 100 selon l'invention procède en déterminant des données caractérisant l'application d'un facteur de pondération à la valeur du seuil de basculement. Plus précisément, le dispositif 100 selon l'invention opère de telle sorte que :
$si MOY_DSI \left(Ti\right) > TH_i alors TH_i ′ = min \left[MOY_DSI\left(Ti\right),\left(1+α\right).TH_i\right] ,$
$si MOY_DSI \left(Ti\right) < TH_i alors TH_i ′ = min \left[MOY_DSI\left(Ti\right),\left(1-α\right).TH_i\right] ,$
$si MOY_DSI \left(Ti\right) = TH_i alors TH_i ′ = TH_i \left(i.e. ne pas adapter\right) ,$
où TH_i' est une valeur adaptée d'un seuil de basculement courant TH_i et *α* est un facteur de pondération qui permet d'assurer que la fonctionnalité de gestion automatisée d'un mode de fonctionnement du véhicule est adaptée de manière progressive afin de ne pas procurer au conducteur quelconque sensation d'inconfort.

Selon une alternative, on peut aussi envisager que le dispositif 100 selon l'invention ne procède pas à l'adaptation des valeurs des seuils de basculement aussitôt qu'un seul changement de mode fonctionnement a été opéré manuellement mais, au contraire, qu'il ne procède aux mises à jour de ces valeurs que lorsque plusieurs changements de mode fonctionnement similaires ont été réalisés, en déterminant dans ce cas la moyenne des valeurs de la moyenne glissante de l'indice de style de conduite à chacun de ces instants auxquels des changements de mode ont été opérés pour ensuite reproduire les étapes de comparaison et de pondération décrites ci-dessus.

On a représenté sur la [Fig.6], sur un premier graphique, l'évolution de la moyenne glissante de l'indice de style de conduite au cours du même roulage (MOY_DSI) et, en dessous, un deuxième graphique montrant les modes de fonctionnement du véhicule correspondants dans le cas où la fonctionnalité de gestion automatisée du mode de fonctionnement du véhicule active utilise à ce stade les valeurs adaptées des seuils de basculement qui sont déterminées en suivant les étapes décrites ci-dessus. Ainsi, une valeur adaptée du premier seuil de basculement haut (TH_H) est à ce stade fixée à une valeur de la moyenne glissante de l'indice de style de conduite égale 96, pour les raisons évoquées ci-dessus, tandis qu'une valeur adaptée du deuxième seuil de basculement bas (TH_L) est fixée à une valeur de la moyenne glissante de l'indice de style de conduite égale à 40. En conséquence, comme on peut le constater sur le graphique du bas, le mode de fonctionnement normal est prioritairement sélectionné, tandis que le mode SPORT est sélectionné à trois reprises (au lieu de six auparavant). La fonctionnalité de gestion automatisée du monde de fonctionnement du véhicule est donc à ce stade en mesure de mieux refléter les choix de modes de fonctionnement que le conducteur opère manuellement.

Selon le deuxième mode de réalisation, c'est-à-dire lorsque le comportement d'un conducteur est déterminé en fonction d'un historique de valeurs de la moyenne glissante d'un indice de style de conduite, le dispositif 100 selon l'invention procède, premièrement, en déterminant des données caractérisant au moins une valeur de la proportion des valeurs dudit historique qui divergent d'une valeur courante d'un seuil de basculement entre un mode de fonctionnement sélectionné et un autre mode de fonctionnement et il détermine ensuite des données caractérisant au moins une valeur résultante d'une soustraction ou d'un ajout d'une valeur de dispersion à ladite valeur courante d'un seuil de basculement entre un mode de fonctionnement sélectionné et un autre mode de fonctionnement.

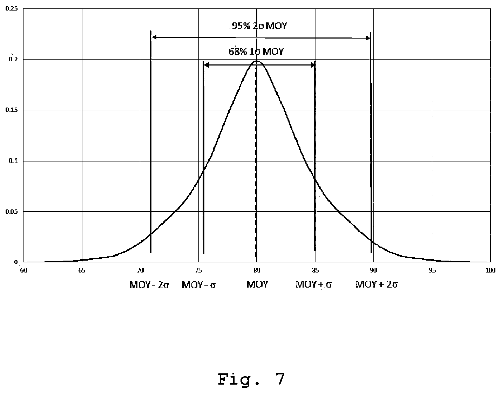

Par exemple, si un conducteur choisit manuellement un mode ECO, avec une valeur d'un seuil de basculement haut fixé à 80 (ECO/NORMAL), et si l'historique des valeurs des moyennes glissantes de l'indice de style de conduite montre que, lors de plusieurs roulages d'une durée significative, les valeurs de la moyenne glissante de l'indice de style de conduite varient majoritairement, par exemple plus de 95% du temps, entre 70 et 90, comme cela est illustré sur la [Fig.7] qui montre un graphique d'un exemple de répartition d'un historique des valeurs de la moyenne glissante d'un indice de style de conduite autour d'une valeur d'un seuil de basculement, le dispositif 100 selon l'invention détermine alors une valeur adaptée du seuil de basculement haut à 70 au lieu de 80, en reflétant ainsi plus précisément le comportement du conducteur qui se satisfait du mode de fonctionnement ECO dès lors que la valeur de la moyenne glissante de l'indice de style de conduite dépasse 70. Sur la base d'un historique de valeur suffisamment long, le dispositif 100 selon l'invention détermine des données caractérisant une valeur d'un paramètre de dispersion (σ), qu'il utilise ensuite pour déterminer des valeurs adaptées de seuils de basculement.

Pour déterminer les valeurs adaptées des seuils de basculement, le dispositif 100 selon l'invention procède ici de la manière suivante. Premièrement, il détermine la moyenne des valeurs de la moyenne glissante de l'indice de style de conduite en lien avec un mode de fonctionnement sélectionné, par exemple le mode de fonctionnement ECO selon l'exemple évoqué ci-dessus, valeur à laquelle il ajoute ou soustrait la valeur du paramètre de dispersion. Puis, il réalise une comparaison de la valeur résultante avec la valeur courante d'un seuil de basculement entre un mode de fonctionnement sélectionné, le mode de fonctionnement ECO selon l'exemple, et un autre mode de fonctionnement, le mode de fonctionnement NORMAL selon l'exemple. Plus précisément, le dispositif 100 selon l'invention opère dans ce cas de telle sorte que :
si MOY_DSI(t=0 ; t=D) - 2 σ < TH_i alors TH_i' = MOY_DSI(t=0 ; t=D) - 2 σ ou TH_i' = TH_i si chevauchement,
si MOY_DSI(t=0 ; t=D) + 2 σ > TH_i alors TH_i' = MOY_DSI(t=0 ; t=D) + 2 σ ou TH_i' = TH_i si chevauchement et
si MOY_DSI(t=0 ; t=D) ± 2 σ = TH_i alors TH_i' = TH_i (i.e. ne rien changer),
où D est la durée de l'historique déterminé au cours de la première étape 301 du procédé. Dans le cas de l'exemple présenté au-dessus, c'est donc de cette manière que le dispositif 100 selon l'invention détermine la valeur adaptée du seuil de basculement haut à 70 au lieu de 80. Et c'est en procédant de la sorte que le dispositif 100 selon l'invention est en mesure dans ce cas également d'adapter les valeurs des seuils de basculement en fonction des choix de mode de fonctionnement que le conducteur opère manuellement. En revanche, au contraire du premier mode de réalisation dans lequel les adaptations des valeurs des seuils de basculements sont réalisées à un ou plusieurs instants auxquels le conducteur effectue une sélection manuelle d'un mode de fonctionnement, les adaptations sont ici réalisées en lien avec la manière dont le conducteur choisit le plus souvent de diverger des valeurs des seuils de basculement. Et c'est en observant ces divergences manifestes et en les reflétant que le dispositif 100 selon l'invention contribue dans ce cas également à la fourniture d'une fonctionnalité de gestion automatisée d'un mode de fonctionnement d'un véhicule automobile qui s'adapte continuellement au comportement du conducteur et qui offre donc une meilleure ergonomie.

Ainsi, grâce au procédé et au dispositif selon l'invention décrits ci-dessus, plusieurs solutions sont fournies pour lier une fonctionnalité de gestion automatisée d'un mode de fonctionnement d'un véhicule automobile fournie par un système d'aide à la conduite du véhicule au comportement du conducteur du véhicule. En particulier, le procédé et le dispositif selon l'invention permettent l'adaptabilité continuelle d'une fonctionnalité de gestion automatisée du mode de fonctionnement du véhicule d'un système d'aide à la conduite en fonction du comportement du conducteur du véhicule. Grâce au dispositif et au procédé selon l'invention, on est donc en mesure de pouvoir satisfaire au mieux un conducteur sur le plan de la gestion automatisée du mode de fonctionnement de son véhicule et on contribue ainsi à une meilleure ergonomie des systèmes d'aide à la conduite qui fournissent une telle fonctionnalité.

## Revendications

1. Procédé de gestion, par un dispositif informatique (100) embarqué à bord d'un véhicule automobile (1), de la fourniture par un système d'aide à la conduite du véhicule (200) d'une fonctionnalité de gestion automatisée du mode de fonctionnement du véhicule, ladite fonctionnalité opérant la sélection d'un mode de fonctionnement courant en fonction de données caractérisant au moins une valeur d'au moins un seuil de basculement entre deux modes de fonctionnement préétablis, le procédé comprenant une étape de :
i. déterminer (301) des données caractérisant un comportement d'un conducteur du véhicule en interagissant avec le système d'aide à la conduite (200) ; **caractérisé en ce que** le procédé comprend une étape de :
ii. déterminer (302) les données caractérisant au moins une valeur d'au moins un seuil de basculement entre deux modes de fonctionnement préétablis en fonction des données caractérisant un comportement d'un conducteur du véhicule.

2. Procédé selon la revendication 1, **caractérisé en ce que,** au cours de l'étape i), sont déterminées des données caractérisant au moins un changement de mode de fonctionnement initié par un conducteur du véhicule tandis que la fonctionnalité de gestion automatisée du mode de fonctionnement du véhicule est inactive et/ou des données caractérisant au moins un refus stipulé en réponse à la diffusion d'une proposition de changement de mode de fonctionnement provoquée par un assistant personnel virtuel du véhicule tandis que la fonctionnalité de gestion automatisée du mode de fonctionnement du véhicule est inactive, sur la base desquelles sont déterminées les données caractérisant un comportement d'un conducteur du véhicule.

3. Procédé selon la revendication 2, **caractérisé en ce que,** au cours de l'étape ii), sont déterminées des données caractérisant au moins un instant auquel ledit changement de mode fonctionnement est intervenu et/ou ledit refus a été stipulé.

4. Procédé selon la revendication 3, **caractérisé en ce que,** au cours de l'étape ii), sont déterminées des données caractérisant au moins une valeur de la moyenne glissante d'un indice de style de conduite en lien avec ledit instant.

5. Procédé selon la revendication 4, **caractérisé en ce que,** au cours de l'étape ii), sont déterminées des données caractérisant au moins une résultante d'une comparaison entre la valeur de la moyenne glissante d'un indice de style de conduite en lien avec ledit instant et une valeur courante d'un seuil de basculement entre deux modes de fonctionnement.

6. Procédé selon la revendication 5, **caractérisé en ce que,** au cours de l'étape ii), sont déterminées des données caractérisant l'application d'un facteur de pondération à la valeur courante d'un seuil de basculement entre deux modes de fonctionnement.

7. Procédé selon la revendication 1, **caractérisé en ce que,** au cours de l'étape i), sont déterminées des données caractérisant un historique de valeurs de la moyenne glissante d'un indice de style de conduite, sur la base desquelles sont déterminées les données caractérisant un comportement d'un conducteur du véhicule.

8. Procédé selon la revendication 7, **caractérisé en ce que** les données caractérisant un historique de valeurs de la moyenne glissante d'un indice de style de conduite sont déterminées seulement s'il est établi que le véhicule se trouve dans une situation de conduite stable.

9. Procédé selon l'une des revendications 7 ou 8, **caractérisé en ce que,** au cours de l'étape ii), sont déterminées des données caractérisant au moins une valeur de la proportion des valeurs dudit historique qui divergent d'une valeur courante d'un seuil de basculement entre un mode de fonctionnement sélectionné et un autre mode de fonctionnement.

10. Procédé selon la revendication 9, **caractérisé en ce que,** au cours de l'étape ii), sont déterminées des données caractérisant au moins une valeur résultante d'une soustraction ou d'un ajout d'une valeur d'un paramètre de dispersion à ladite valeur courante d'un seuil de basculement entre un mode de fonctionnement sélectionné et un autre mode de fonctionnement.

11. Procédé selon les revendications 4 et 7, **caractérisé en ce que** des données caractérisant au moins une valeur d'accélération, au moins un valeur relative à un changement de rapport de boite de vitesse et au moins une valeur relative à l'anticipation de freinages sont déterminées, sur la base desquelles sont déterminées les données caractérisant au moins une valeur de la moyenne glissante d'un indice de style de conduite en lien avec ledit instant et les données caractérisant un historique des valeurs de la moyenne glissante d'un indice de style de conduite.

12. Dispositif (100) de gestion de la fourniture par un système d'aide à la conduite d'un véhicule automobile d'une fonctionnalité de gestion automatisée du mode de fonctionnement du véhicule, ladite fonctionnalité opérant la sélection d'un mode de fonctionnement courant en fonction de données caractérisant au moins une valeur d'au moins un seuil de basculement entre deux modes de fonctionnement préétablis, **caractérisé en ce que** le dispositif comprend au moins une unité de traitement d'informations (101), comprenant au moins un processeur, et un support de stockage de données (102) configurés pour mettre en œuvre un procédé selon l'une quelconque des revendications précédentes.

13. Programme d'ordinateur comprenant des instructions de code de programme pour l'exécution des étapes d'un procédé selon l'une quelconque des revendications 1 à 11 lorsque ledit programme est exécuté par au moins un processeur.

14. Support utilisable dans un ordinateur, **caractérisé en ce qu'un** programme selon la revendication 13 y est enregistré.

15. Véhicule automobile, **caractérisé en ce qu'il** embarque un dispositif selon la revendication 12.

## Patentansprüche

1. Verfahren zur Steuerung, durch eine sich an Bord eines Kraftfahrzeugs (1) befindende Rechenvorrichtung (100), der Bereitstellung einer Funktion zur automatisierten Steuerung der Betriebsart des Fahrzeugs durch ein Fahrassistenzsystem des Fahrzeugs (200), wobei die Funktion das Auswählen einer aktuellen Betriebsart in Abhängigkeit von Daten vornimmt, die mindestens einen Wert mindestens einer Umschaltschwelle zwischen zwei vordefinierten Betriebsarten kennzeichnen, wobei das Verfahren einen Schritt umfasst zum:
i. Bestimmen (301) von Daten, die ein Verhalten eines Fahrers des Fahrzeugs kennzeichnen, durch Interaktion mit dem Fahrassistenzsystem (200); **dadurch gekennzeichnet, dass** das Verfahren einen Schritt umfasst zum:
ii. Bestimmen (302) der Daten, die mindestens einen Wert mindestens einer Umschaltschwelle zwischen zwei vordefinierten Betriebsarten kennzeichnen, in Abhängigkeit von den Daten, die ein Verhalten eines Fahrers des Fahrzeugs kennzeichnen.

2. Verfahren nach Anspruch 1, **dadurch gekennzeichnet, dass** während des Schritts i) Daten bestimmt werden, die mindestens einen Betriebsartenwechsel kennzeichnen, der von einem Fahrer des Fahrzeugs eingeleitet wird, während die Funktion zur automatisierten Steuerung der Betriebsart des Fahrzeugs inaktiv ist, und/oder Daten, die mindestens eine Ablehnung kennzeichnen, die als Reaktion auf die Ausgabe eines von einem virtuellen persönlichen Assistenten des Fahrzeugs veranlassten Vorschlags zum Betriebsartenwechsel geäußert wird, während die Funktion zur automatisierten Steuerung der Betriebsart des Fahrzeugs inaktiv ist, auf deren Grundlage die Daten bestimmt werden, die ein Verhalten eines Fahrers des Fahrzeugs kennzeichnen.

3. Verfahren nach Anspruch 2, **dadurch gekennzeichnet, dass** während des Schritts ii) Daten bestimmt werden, die mindestens einen Zeitpunkt kennzeichnen, zu dem der Betriebsartenwechsel stattgefunden hat und/oder die Ablehnung geäußert wurde.

4. Verfahren nach Anspruch 3, **dadurch gekennzeichnet, dass** während des Schritts ii) Daten bestimmt werden, die mindestens einen Wert des gleitenden Mittelwerts eines Fahrstilindex in Bezug auf diesen Zeitpunkt kennzeichnen.

5. Verfahren nach Anspruch 4, **dadurch gekennzeichnet, dass** während des Schritts ii) Daten bestimmt werden, die mindestens eine Resultierende eines Vergleichs zwischen dem Wert des gleitenden Mittelwerts eines Fahrstilindex in Bezug auf diesen Zeitpunkt und einem aktuellen Wert einer Umschaltschwelle zwischen zwei Betriebsarten kennzeichnen.

6. Verfahren nach Anspruch 5, **dadurch gekennzeichnet, dass** während des Schritts ii) Daten bestimmt werden, die die Anwendung eines Gewichtungsfaktors auf den aktuellen Wert einer Umschaltschwelle zwischen zwei Betriebsarten kennzeichnen.

7. Verfahren nach Anspruch 1, **dadurch gekennzeichnet, dass** während des Schritts i) Daten bestimmt werden, die eine Historie von Werten des gleitenden Mittelwerts eines Fahrstilindex kennzeichnen und auf deren Grundlage die Daten bestimmt werden, die ein Verhalten eines Fahrers des Fahrzeugs kennzeichnen.

8. Verfahren nach Anspruch 7, **dadurch gekennzeichnet, dass** die Daten, die eine Historie von Werten des gleitenden Mittelwerts eines Fahrstilindex kennzeichnen, nur bestimmt werden, wenn festgestellt wird, dass sich das Fahrzeug in einer stabilen Fahrsituation befindet.

9. Verfahren nach einem der Ansprüche 7 oder 8, **dadurch gekennzeichnet, dass** während des Schritts ii) Daten bestimmt werden, die mindestens einen Wert des Anteils der Werte der Historie kennzeichnen, die von einem aktuellen Wert einer Umschaltschwelle einer ausgewählten Betriebsart und einer anderen Betriebsart abweichen.

10. Verfahren nach Anspruch 9, **dadurch gekennzeichnet, dass** während des Schritts ii) Daten bestimmt werden, die mindestens einen Wert kennzeichnen, der aus einer Subtraktion oder Addition eines Werts eines Dispersionsparameters von bzw. zu dem aktuellen Wert einer Umschaltschwelle zwischen einer ausgewählten Betriebsart und einer anderen Betriebsart resultiert.

11. Verfahren nach den Ansprüchen 4 und 7, **dadurch gekennzeichnet, dass** Daten, die mindestens einen Beschleunigungswert, mindestens einen Wert bezüglich eines Gangwechsels und mindestens einen Wert bezüglich der Antizipation von Bremsungen kennzeichnen, bestimmt werden, auf deren Grundlage die Daten, die mindestens einen Wert des gleitenden Mittelwerts eines Fahrstilindex in Bezug auf den Zeitpunkt kennzeichnen, und die Daten, die eine Historie der Werte des gleitenden Mittelwerts eines Fahrstilindex kennzeichnen, bestimmt werden.

12. Vorrichtung (100) zur Steuerung der Bereitstellung einer Funktion zur automatisierten Steuerung der Betriebsart des Fahrzeugs durch ein Fahrassistenzsystem eines Kraftfahrzeugs, wobei die Funktion das Auswählen einer aktuellen Betriebsart in Abhängigkeit von Daten vornimmt, die mindestens einen Wert mindestens einer Umschaltschwelle zwischen zwei vordefinierten Betriebsarten kennzeichnen, **dadurch gekennzeichnet, dass** die Vorrichtung mindestens eine Informationsverarbeitungseinheit (101) umfasst, die mindestens einen Prozessor und ein Datenspeichermedium (102) umfasst, die dazu ausgelegt sind, ein Verfahren nach einem der vorhergehenden Ansprüche durchzuführen.

13. Computerprogramm, das Programmcodeanweisungen umfasst, die bei der Ausführung des Programms durch mindestens einen Prozessor die Schritte eines Verfahrens nach einem der Ansprüche 1 bis 11 ausführen.

14. In einem Computer verwendbares Medium, **dadurch gekennzeichnet, dass** ein Programm nach Anspruch 13 darauf gespeichert ist.

15. Kraftfahrzeug, **dadurch gekennzeichnet, dass** es eine Vorrichtung nach Anspruch 12 mitführt.

## Claims

1. Method, carried out by a computing device (100) on board a motor vehicle (1), for managing the provision, by a vehicle driving assistance system (200), of an automated management functionality for automated management of the operating mode of the vehicle, said functionality selecting a current operating mode based on data characterizing at least one value of at least one threshold for switching between two pre-established operating modes, the method comprising a step of:
i. determining (301) data characterizing a behaviour of a driver of the vehicle while interacting with the driving assistance system (200); **characterized in that** the method comprises a step of:
ii. determining (302) the data characterizing at least one value of at least one threshold for switching between two pre-established operating modes based on the data characterizing a behaviour of a driver of the vehicle.

2. Method according to Claim 1, **characterized in that**, in step i), data characterizing at least one change of operating mode initiated by a driver of the vehicle while the automated management functionality for automated management of the operating mode of the vehicle is inactive and/or data characterizing at least one rejection stipulated in response to the issuance of a suggestion to change operating mode made by a virtual personal assistant of the vehicle while the automated management functionality for automated management of the operating mode of the vehicle is inactive are determined, on the basis of which the data characterizing a behaviour of a driver of the vehicle are determined.

3. Method according to Claim 2, **characterized in that**, in step ii), data characterizing at least one time at which said change of operating mode took place and/or said rejection was stipulated are determined.

4. Method according to Claim 3, **characterized in that**, in step ii), data characterizing at least one value of the moving average of a driving style index in relation to said time are determined.

5. Method according to Claim 4, **characterized in that**, in step ii), data characterizing at least one result of a comparison between the value of the moving average of a driving style index in relation to said time and a current value of a threshold for switching between two operating modes are determined.

6. Method according to Claim 5, **characterized in that**, in step ii), data characterizing the application of a weighting factor to the current value of a threshold for switching between two operating modes are determined.

7. Method according to Claim 1, **characterized in that**, in step i), data characterizing a history of values of the moving average of a driving style index are determined, on the basis of which the data characterizing a behaviour of a driver of the vehicle are determined.

8. Method according to Claim 7, **characterized in that** the data characterizing a history of values of the moving average of a driving style index are determined only if it is established that the vehicle is in a stable driving situation.

9. Method according to either of Claims 7 and 8, **characterized in that**, in step ii), data characterizing at least one value of the proportion of the values of said history that deviate from a current value of a threshold for switching between a selected operating mode and another operating mode are determined.

10. Method according to Claim 9, **characterized in that**, in step ii), data characterizing at least one value resulting from a subtraction or addition of a value of a dispersion parameter from or to said current value of a threshold for switching between a selected operating mode and another operating mode are determined.

11. Method according to Claims 4 and 7, **characterized in that** data characterizing at least one acceleration value, at least one value relating to a gear change and at least one value relating to anticipated braking are determined, on the basis of which the data characterizing at least one value of the moving average of a driving style index in relation to said time and the data characterizing a history of the values of the moving average of a driving style index are determined.

12. Device (100) for managing the provision, by a driving assistance system of a motor vehicle, of an automated management functionality for automated management of the operating mode of the vehicle, said functionality selecting a current operating mode based on data characterizing at least one value of at least one threshold for switching between two pre-established operating modes, **characterized in that** the device comprises at least one information processing unit (101), comprising at least one processor, and a data storage medium (102) that are configured to implement a method according to any one of the preceding claims.

13. Computer program comprising program code instructions for carrying out the steps of a method according to any one of Claims 1 to 11 when said program is executed by at least one processor.

14. Medium able to be used in a computer, **characterized in that** a program according to Claim 13 is recorded thereon.

15. Motor vehicle, **characterized in that** it carries on board a device according to Claim 12.
